Europäisches Patentamt

European Patent Office

Office européen des brevets

(19)

(11) Veröffentlichungsnummer : **0 271 546 B1**

# EUROPÄISCHE PATENTSCHRIFT

(12)

(45) Veröffentlichungstag der Patentschrift :
**11.12.91 Patentblatt 91/50**

(51) Int. Cl.$^5$ : **B64C 23/06**

(21) Anmeldenummer : **87904029.3**

(22) Anmeldetag : **26.06.87**

(86) Internationale Anmeldenummer :
**PCT/DE87/00290**

(87) Internationale Veröffentlichungsnummer :
**WO 88/00153 14.01.88 Gazette 88/02**

(54) FLUGZEUG.

(30) Priorität : **28.06.86 DE 3621800**

(43) Veröffentlichungstag der Anmeldung :
**22.06.88 Patentblatt 88/25**

(45) Bekanntmachung des Hinweises auf die
Patenterteilung :
**11.12.91 Patentblatt 91/50**

(84) Benannte Vertragsstaaten :
**AT CH DE FR GB IT LI NL SE**

(56) Entgegenhaltungen :
**DE-A- 2 149 956**
**FR-A- 2 355 188**
**US-A- 2 743 888**
**US-A- 2 846 165**

(73) Patentinhaber : **Riedelsheimer, Hans-Joachim**
**Marienstrasse 14**
**W-8752 Glattbach (DE)**

(72) Erfinder : **Riedelsheimer, Hans-Joachim**
**Marienstrasse 14**
**W-8752 Glattbach (DE)**

(74) Vertreter : **Pöhner, Wilfried Anton, Dr.**
**Kaiserstrasse 27 Postfach 63 23**
**W-8700 Würzburg 1 (DE)**

## Beschreibung

Den Oberbegriff der Erfindung gemäß Anspruch 1 bildet die US-A-2 743 888 (Lippisch).

Hieraus ist bekannt, an den Traglügeln von Flugzeugen an der Flügelspitze Einzelflügel (Winglets) im wesentlichen vom Rumpf weg weisend anzubringen, die um ihre Längsachse gegen die durch den Tragflügel definierten Ebene derart verschwenkt sind, daß sie in Richtung der Nase des Tragflügels nach unten weisen. Jeder Einzelflügel bilder eine Ebene und es ist vorgesehen, sie in Längersrichtung des Tragflügels ausfahrbar zu machen. Erwähnt ist, daß sich durch die Einzelflügel der Auftrieb und die Tragfähigkeit erhöhen.

Hiervon ausgehend hat sich die Erfindung die Weiterentwichlung derartiger an Tragflügeln befestigter Einzelflügel (Winglets) zur Aufgabe gemacht, daß sie wesentlich besser zur Auftriebserzeugung und Unterdrückung des Randwirbels genutzt werden.

Gelöst wird diese Aufgabe durch die im Kennzeichen des Anspruches 1 angegebenen Merkmale.

Aufgabe der Schränkung der Einzelflügel ist, eine Anpassung des Einzelflügels an die im Bereich der Spitze des Tragflügels herrschenden Luftströmungen, die sich mit zunehmendem Abstand vom Tragflügel immer mehr der Anströmrichtung der umgebenden Luft anpaßt. Unter Schränkung ist eine um die Längsrichtung des Einzelflügels verlaufende schraubenförmige Verwindung zu verstehen.

Die gekrülmmte Form der Anschlußkurve ergibt eine bessere Ausnutzung der Strömung im Wurzelbereich jedes Einzelflügels und einem mehr oder weniger starke Unterdrückung der Beaufschlagung des oder der nachfolgenden Einzelflügel durch den Randflügel der davor befindlichen.

Zur Vermeidung einer Beeinflussung der nachlaufenden Flügel durch die vom vorlaufenden Einzelflügel beeinflußten Luftmassen - also der Anordnung außerhalb des Abwindfeldes - die vorderen Einzelflügel stets höher als die nachfolgenden Anzuordnen. Das Ziel ist die Separierung der Einzelflügel. Der entscheidende Grund für diese Maßnahme besteht in der Erkenntnis, daß im Bereich der Spitze des Tragflügels die dort sich ausbildende Strömung verursacht wird einerseits durch den Druckunterschied zwischen Flügelober- und Unterseite, die eine Strömung von unten nach oben bedingt, und zusätzlich durch die Bewegung des Flugzeuges relativ zur umgebenden Luft, welche eine Strömung in horizontaler Richtung entgegen der Flugbewegung erzeugt. Die Oberlagerung dieser beiden Einflüße gibt eine Strömung der Luft im Bereich der Spitze des Tragflügels, die von vorne unten (definiert durch die Nase des Tragflügels) schräg nach oben hinten (definiert durch die Hinterkante des Tragflügels) gerichtet ist. Diese Strömung wird naturgemäß mit zunehmendem Abstand vom Tragflügel geringer und ist in einem bestimmten Abstand überhaupt nicht mehr feststellbar. Sowohl die Stärke als auch die Richtung dieser Strömung hängt von mehreren Faktoren ab und wird unter anderem bestimmt durch die Geschwindgkeit des Flugzeuges, dessen Gewicht und dem Profildifferenzdruck. Erfindungsgemäß sind die Einzelflügel entlang ihrer Mittellinie sichelförmig nach oben gekrümmt. Dies stellt einen optimalen Kompromiß dar einerseits zwischen weitestgehender Ausnutzung der im Bereich der Spitze des Tragglügels stattfindenden Strömungen durch enge Anordnung einer Maximalzahl an Einzelflügelm und andererseits einen hinreichenden Abstand zur Vermeidung negativer gegenseitiger Beeinflussungen der Einzelflügel. Zwar bewirkt das Abweichen des Einzelflügels vom horizontalen Verlauf eine Verringerung der Auftriebskomponente, verursacht darfür, daß die vom Einzelflügel erzeugten nachlaufenden Wirbel divergieren und keine nennenswerte gegenseitige Beeinflussung vorkommen kann. Bei mehreren Einzelflügeln kann die Krümmung selbstverständlich individuell verschieden gewählt werden. Das Ziel ist die Äquidistanz der Einzelflügel im befestigungsfernen Raum über einen maximalen Längenbereich. Allerdings ist erwünscht, daß bei Einsatz als Querruder die Einzelflügel sich strömungsgäßig gegenseitig beeinflussen, was dem Ablösen und Abreißen der Strömung entgegenwirkt. Der kerngedanke der Erfindung besteht nun darin, diese im Bereich der Spitze des Tragflügels vorkommende Strömung dadurch zu nutzen und die Entstehung des Randwirbels zu unterdrücken, daß dort ein oder mehrere Einzelflügel so angebracht und eingestellt werden, daß sie auf aerodynamisch optimale Weise umströmt werden.

Die durch die erfindungsgemäße Maßnahme erreichbaren Vorteile sind vielfältig: So entstehen an den Einzelflügeln Auftriebskräfte, die auf Grund der Verschwenkung relativ zum Tragflügel eine wesentlich höhere Kraftkomponente in Flugrichtung aufweisen und daraus resultierend einen vergleichsweise großen zusätzlichen Beitrag zum Vortrieb erbringen können. Die Ausnutzung der im Bereich der Spitze des Tragflügels vorhandenen Strömung bewirkt in Abhängigkeit von der Einstellung eine mehr oder weniger vollständige Unterdrückung des Randwirbels und eine entscheidende Minderung des induzierten Widerstandes, vor allem auch dadurch, daß die Schränkung der Strömung an der Oberseite des Tragflügels geringer wird (die Schränkung auf der Unterseite bleibt hingegen gleich) und folglich die Hinterkantenwirbel abgeschwächt werden. Die in Form der Verbrennung des Kraftstoffes aufgebrachte Energie wird dann zu einem größeren Anteil in die Fortbewegung des Flugzeuges und nicht mehr zur Oberwindung des Widerstandes bzw. zur Erzeugung der Randwirbel aufgewendet. Man erhält eine wesentlich bessere Energieausnutzung und einen geringeren Kraftstoffverbrauch bei gleicher Flugleistung. Schließlich wird durch Minderung oder Unterdrückung der Randwirbel die Sicherheit für in der Nähe befindliche Flugzeuge erhöht und verbessert. Des weiteren bleibt anzumerken, daß die erfindungsgemäße Lehre sowohl in Motor- als auch Segelflugzeugen realisiert werden kann.

Mit zunehmendem Abstand von der Spitze des Tragflügels ändert und paßt sich die Strömung immer mehr der Anströmrichtung der umgebenden Luft an, de die Beeinflußung durch den Druckgradient zwischen Ober- und Unterseite des Tragflügels schwächer wird und dann ganz entfällt. Zur optimalen Anpassung und Ausnutzung der im Bereich der Spitze des Tragflügels herrschenden Strömung ist es empfehlenswert jeden Einzelflügel mit eine Schränkung, also mit einer in Längsrichtung des Flügels als Achse verlaufenden schraubenförmigen Verwindung. Für einen bestimmten Flugzustand, wie beispielsweise der Standardreisegeschwindigkeit lassen sich dann optimale Verhältnisse über die gesamte Länge des Einzelflügels erreichen. Dabei ist die Schränkung so zu dimensionieren, daß in jedem Teilbereich des Einzelflügels für die dort herrschende Strömung der günstigste Anströmwinkel gebildet wird. Hieraus folgt, daß zum äußeren Ende des Einzelflügels hin eine Position eingenommen wird, die in Bezug auf die (unbeeinflußte) Anströmrichtung den optimalen Winkel bildet und sich deshalb an die Ebene des Tragflügels asymptotisch angleichen. Grundsätzlich kann die Schränkung der Einzelflügel auf individuelle Weise unterschiedlich gewählt werden. Im Hinblick auf die Länge eines Einzelflügels kann die Schränkung nichtlinear vorgenommen werden, d.h. die Abnahme des Neigungswinkels pro Längeneinheit verschieden gewählt sein, beispielsweise im Bereich der Befestigung am Tragflügel sowie am äußeren Ende des Einzelflügels gering, hingegen im Zwischenbereich eigrößere Schränkung aufweisen, so daß ein "S"-Schlag entsteht.

Durch die Maßnahme, die Anschlußkurve zwischen Tragflügel und den Einzelflügeln so zu krümmen, daß sie in Richtung auf die Hinterkante des Tragflügels zum Rumpf hin weist, erreicht man zum einen, daß im Wurzelbereich jedes Einzelflügel die Strömung besser ausgenutzt werden kann und zum anderen die Beaufschlagung des oder der nachfolgenden Einzelflügel durch die Randwirbel des oder der davor befindlichen mehr oder weniger stark unterdrückt werden kann. Dies ist graduell beeinflußbar durch die möglicherweise unterschiedlich gewählte Spannweite der Einzelflügel. Dieses Ziel erreicht man nicht alleine mit einer Krümmung der Anschlußkurve ausgehend von der Nase des Tragflügels zum Rumpf hin, sondern bereits dann, wenn die Anachlußkurve einen Halbkreis oder einen vom Rumpf weg weisenden Winkelschenkel beschreibt.

Bei mehreren Einzelflügeln ist von besonderem Vorteil den in Flugrichtung gesehen vorderen bezogen auf die Ebene des Tragflügels stets höher als den nachfolgenden anzuordnen. Man erhält eine räumliche Versetzung der Einzelflügel, die so groß sein solte, daß der nachlaufende Flügel außerhalb der vom vorlaufenden Einzelflügel beeinflußten Luftmaßen zu liegen kommt. Er solite also nicht mehr in dessen Abwindfeld liegen. Natürlich ist der direkte Anschlußbereich am Tragflügel hiervon ausgenommen, so daß dort die Energie nur teilweise genutzt werden kann. Erst mit zunehmendem Abstand vom Tragflügel ergibt sich eine ausreichende Separierung der Einzelflügel.

Ein weiterer Vorschlag geht dahin, alle Einzelflügel im Bereich ihrer Befestigung am Hauptflügel so anzuordnen, daß sie trotz grundsätzlich möglicher unterschiedlicher Längen in etwa die gleiche Neigung besitzen. Bei Verwendung von geschränkten Einzelflügeln unterschiedlicher Länge ist dann der Änderungswinkel und damit die Schränkung pro Längeneinheit verschieden. Durch die Worte "in etwa" wird angedeutet, daß die Strömungsverhältnisse ausgehend von der Nase des Tragflügels zu dessen Hinterkante hin eine leichte schraubenförmige Bewegung unmittelbar an der Spitze des Flügels vornehmen, so daß bei exakter Betrachtungsweise die Niegung der Einzelflügel in idealer Weise und relativ zueinander geringfügig geändert werden sollte.

Untersucht man in der durch den Tragflügel aufgespannten ebene im Bereich der Spitze die sich räumlich ändernden Richtungen der dort herrschenden Strömungen, so stellt man fest, daß die Punkte mit gleichem Strömungswinkel in dieser Ebene auf einer Paralel liegen, deren Scheitel im Bereich der Nase des Tragflügels liegt und deren Drehachse in Anströmrichtung verläuft. Zur Anpassung hieran wird bei mehreren Einzelflügeln empfohlen, deren Spannweite zu wählen, daß die in Flugrichtung gesehen vorderen kürzer sind als die nachfolgenden. Insbesondere können die Enden der Einzelflügel auf einer Paralel liegen. Wie bereits erläutert, sollen bei Verwendung mehrerer Einzelflügel unterschiedlicher Längen die Verwindung und damit die Schränkung pro Längeneinheit unterschiedlich sein. Ein ähnliches Ergebnis läßt sich auch dadurch erreichen, daß die Einzelflügel nach hinten zu anklappbar sind. Bei bestimmten Flugverhältnissen, wie beispielsweise im Schnellflug, ist es von Interesse, den Stirn- bzw. Profilwiderstand der Einzelflügel hierdurch zu reduzieren. Hierfür nimmt man in Kauf, daß die Einzelflügel dann außer Funktion gesetz werden.

Aufgrund einer weiteren besonderen Empfehlung wird eine solche Positionierung der äußeren Enden der Einzelflügel vorgeschlagen, daß die von den Spitzen ausgehenden (induzierten) Wirbel einen solchen Phasenbezug relativ gegeneinander erhalten, daß sie sich durch Interferenz gegenseitig auslöschen und hierdurch energetische Verluste weiter reduziert werden können.

In einer weiteren Ausführungsform wird die Verstellbarkeit des Antellwinkels der Einzelflügel vorgeschlagen. Da die Richtung der Strömung unter anderem durch die Geschwindigkeit des Flugzeuges beeinflußt wird, erlaubt die Verstellbarkeit die Anpassung an den jeweiligen Flugzustand. Dann ist nicht nur bei einer bestimmten Geschwindigkeit, wie die der Standardreisegeschwindigkeit ein optimaler Anstellwinkel möglich. Hierbei erweist es sich als von Vorteil, daß die Schränkung des Einzelflügels pro Längeneinheit sich nur geringfügig ändert und deshalb im wesentlichen konstant bleibt. Die optimale Steuerung kann über einen Anstellwinkelsensor erfolgen. Die Drehachse jedes Einzelflügels verläuft in aller Regel in Richtung der Spannweite des Einzelflügels.

Eine torsionselastische Aufhängung des Einzelflügels vor dem Momentenneutralpunkt hat zum Vorteil, daß sich der Einzelflügel unter Einwirkung einer Böe aufzurichten versucht und damit selbsttätig und ohne den Flügel als ganzes nachregeln und verstellen zu müssen, in den optimaleren Anstellwinkel übergeht.

Zur optimalen Einstellung bei unterschiedlichen Geschwindigkeiten ist es grundsätzlich von Vorteil, die Spannweiten jedes Einzelflügels veräderbar zu wählen. Sollte sich diese Ausgestaltung jedoch als konstruktiv zu aufwendig erweisen, empfiehlt sich die Anpassung an die Standardreisegeschwindigkeit und die Optimierung dieses Betriebszustandes. Dann allerdings verliert man bei einer Änderung der Fluggeschwindigkeit einen Teil der Energie, wobei jedoch nach wie vor der Großteil im Wirkungsbereich der Einzelflügel bleibt.

Nachfolgend werden konkrete Möglichkeiten der Steuerung der Einzelflügel sowie unterschiedlicher hierdurch erreichbarer Wirkungen erläutert und ausgeführt. Zur optimalen Ausnutzung der Strömung in jedem Flugzustand ist, wie bereits ausgeführt, der Anstellwinkel in Abhängigkeit von der momentanen Geschwindigkeit zu ändern. Bei den modernen, durchweg bereits mit einem Bordcomputer zur Steuerung der verschiedenen Bordsysteme versehenen Verkehrsflugzeuge empfiehlt es sich, die verschiedenen, den Anstellwinkel bestimmenden Daten zu erfassen, mit Hilfe des Computers auszuwerten und in entsprechender Weise den Anstellwinkel zu fahren und einzustellen. Durch diese Maßnahme gelingt eine optimale Ausnutzung der Einzelflügel für den Geradeausflug.

Eine weitere Möglichkeit besteht darin, die Einzelflügel so zu steuern, daß sie als Querruder dienen und ein Rollmoment um die Längsachse des Flugzeuges entsteht. Im Stande der Technik werden als Querruder im äußeren Flügelbereich Wölbklappen angebracht. Sie erzeugen neben der gewünschten Bewegung um die Längsachse allerdings in nachteiliger Weise ein der Kurvenrichtung entgegengerichtetes Moment um die Hochachse, das negative Wendemoment. Es wird kompensiert durch Einsatz wahlweise des Seitenruders oder durch kurveninneren Spoilerausschlag. Durch Bewegung der Wölbklappe entsteht eine Druckpunktwanderung am Tragflügel, so daß diese mit einem zusätzlichen Torsionsmoment beaufschlagt wird. Des weiteren nehmen die Wölbklappen einen wesentlichen Teil der Spannweite in Anspruch und verhinden aus räumlichen Gründen die an sich gewünschte größere Dimensionierung der Start- und Landeklappen. Zur Unterstützung der Wölbklappen werden bei Verkehrsflugzeugen die kurveninneren Spoiler ausgefahen. Sowohl Wölbklappe als auch Spoiler haben unerwünschte Nebeneffekte, neigen zu Strömungsabriß und stellen dadurch, insbesondere die Wölbklappenquerruder in der Sportfliegerei ein Hauptunfallursache dar.

Wenn nun die Einzelflügel an den Ebenen der sich gegenüberliegenden Tragflügel entgegengesetzt eingestellt und gesteuert werden, erreicht man ein Rollmoment um die Längsachse, also die Wirkungs eines Querruders ohne das im Tragflügel Torsionsmomente nennenswerter Größe entstehen. Grundsätzlich ist bei entsprechender Abstimmung der Einzelflügel erreichbar, daß das Torsionsmoment zu null wird. Zusätzlich können Wölbklappen und Spoiler kleiner dimensioniert werden und im günstigsten Fall sogar vollständig entfallen. Hierdurch entsteht Platz für die Start- und Landeklappen, die dann beinahe oder vollständig über die gesamte Hinterkante des Tragflügels gezogen werden können. Bei mehreren Einzelflügeln an einem Tragflügel sowie deren Einstellung als Querruder zur Erzeugung eines Rollmomentes erhöht sich das von jedem Einzelflügel beeinflußte Luftvolumen. Es läßt sich dann ohne weiteres erreichen und ist sogar - im Gegensatz zum Geradeausflug - erstrebenswert, daß sich der nachfolgende Einzelflügel dann zumindest teilweise im Abwindfeld des Vorläufers befindet. Dies bedingt einerseits eine Widerstandserhöhung - andererseits kann dann die Strömung am nachfolgenden Einzelflügel nicht mehr abreißen. Dies stellt einen weiteren erheblichen Sicherheitsvorteil gegenüber den bislang verwendeten Wölbklappen und Spoilern als Querruder dar. Eine der häufigsten Unfallursachen wäre dann ausgeschaltet.

Schließlich kann die Ansteuerung so vorgenommen werden daß die kurveninneren Einzelflügel einen höheren Strömungswiderstand als die kurvenäußeren bilden, so daß ein positives Wendemoment entsteht. Es kann dazu benutzt werden, das durch Betätigen der Wölbklappen zwangsläufig entstehenden negative Wendemoment zu verringern oder vollständig zu kompensieren, so daß die bisher zum Ausgleich erforderlichen Seitenruder kleiner ausgelegt werden können. Auch hier ist wie bei den Wölbklappen und den Spoilern von Bedeutung, daß deren Betätigung einen wesentlichen Widerstandszuwachs mit sich bringt.

Weitere Einzelheiten, Merkmale und Vorteile der Erfindung lassen sich dem nachfolgenden Beschreibungsteil entnehmen, in dem an Hand der Zeichnung eine Ausführungsform der Erfindung näher erläutert wird. Es zeigen:

Figur 1 eine Draufsicht auf das Ende eines Tragflügels mit fünf Einzelflügeln,

Figur 2 den Flügel gemäß Figur 1 in Vorderansicht,

Figur 3 das Ende eines Tragflügels mit gekrümmten Einzelflügeln,

Figur 4 den Tragflügel gemäß Figur 3 in Vorderansicht.

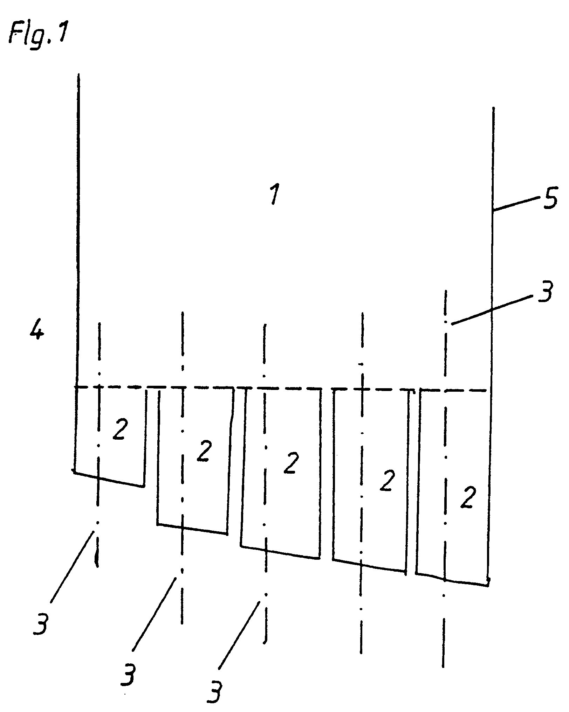

Figur 1 zeigt in Draufsicht und in skizzenhafter Widergabe das freie Ende eines Tragflügels 1, an dem fünf Einzelflügel 2 nach außen weisend angebracht sind. Jeder ist mit einer Drehachse 3 versehen, der es gestattet, den Anstellwinkel jedes Einzelflügels 2 zu verändern und entsprechend einzustellen. Dabei verlaufen die Drehachsen im wesentlichen in der Spannweitenrichtung jedes Einzelflügels 2. Deren Längen sind unterschiedlich und zwar verlaufen die freien, vom Tragflügel 1 wegweisenden Enden auf einer Parabel, die von der Nase 4 des Tragflügels 1 ausgeht und in Richtung auf dessen Hinterkante 5 zu verläuft. Die Paralel liegt in der durch den Tragflügel aufgespannten Ebene. Die Einzelflügel 2 sind, was in Draufsicht nicht gut erkennbar ist um ihre Achse so verschwenkt, daß sie in Richtung der Nase 4 des Tragflügels 1 nach untern und demzufolge im Bereich der Hinterkante 5 nach oben zu weisen und entsprechend ausgerichtet sind. Die Einzelflügel 2 liegen dann im wesentlichen in der im Bereich der Spitze des Tragflügels 1 herrschenden Luftströmung. Da gerade diese Strömungen während des Fluges im Bereich der Nase 4 noch zusammengedrängt ist, sich zur Hinterkante 5 hin um so mehr entwickelt, empfiehlt es sich die Spannweise der einzelnen Flügel so zu wählen, daß der vordere jeweils kürzer als der nachfolgende ist.

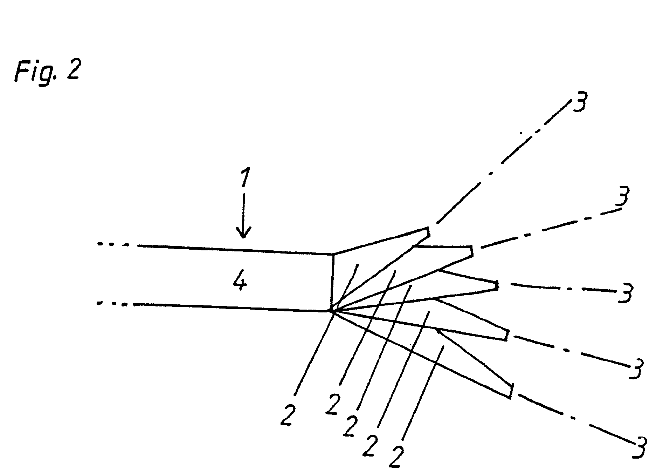

Wie sich aus Figur 2, der Vorderansicht von Figur 2, entnehmen läßt, sind hierbei noch die Einzelflügel 2 in ihrer Höhe so versetzt, daß der vordere stets höher als der nachfolgende angeordnet ist, um eine Deeinflußung des dahinter befindlichen Einzelflügels 2 durch den Abwind des davor angeordneten zu vermeiden. Lediglich im Anschlußbereich an den Tragflügel 1 können Beeinflußungen prinzipiell nicht ausgeschloßen werden. Aus der Vorderansicht ist auch gut zu erkennen, daß die in Flugrichtung vorderen, also im Bereich der Nase 4 des Tragflügels 1 befindlichen Einzelflügel 2 jeweils kürzer als der oder die nachfolgenden ist.

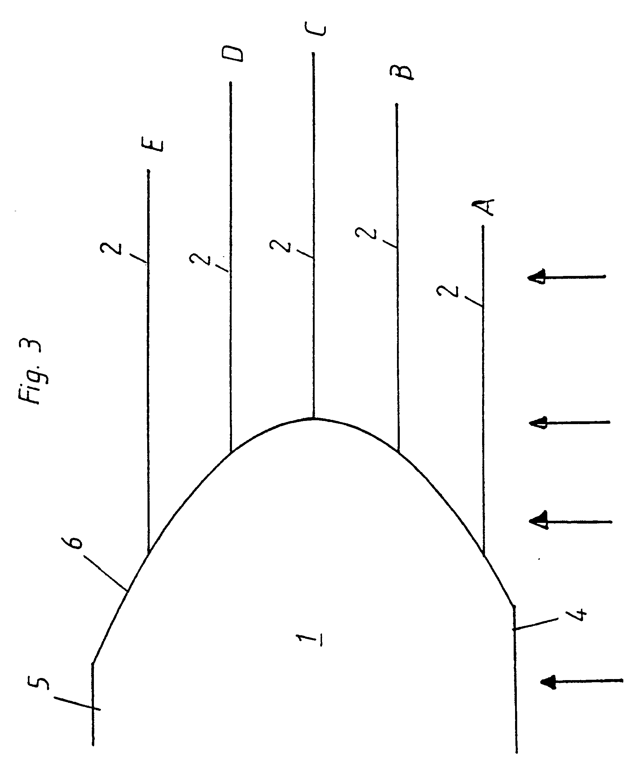

Figur 3 zeigt das Ende eines Tragflügels 1 mit etwa parabelförmiger Anschlußkurve 6. Die daran befestigten Einzelflügel 2 verlängern sich nach hinten zu und sind äquidistant zueinander in ihrer Projektion auf die durch den Tragflügel definierte Ebene angeornet.

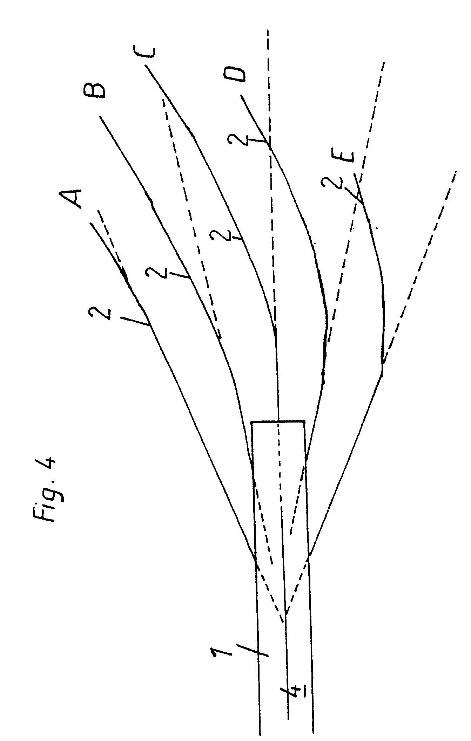

Wie aus der dieselbe Ausführungsform zeigenden Figur 4 gut erkennbar, sind die Einzelflügel 2 sichelförmig nach oben gekrümmt und derart höhenversetzt angeordnet, daß der in Strömungsrichtung gesehen vordere Einzelflügel 2 stets höher als der nachfolgende angeordnet, der erste (A) damit am höchsten und der letzte (E) am niedrigten verläuft. Die gestrichelte, je dem Einzelflüngel 2 zugeordnete Linie gibt den ungekrümmten Verlauf wieder und verdeutlicht die Sichelform.

Im Ergebnis erhält man durch die Erfindung eine optimale Ausnutzung der im Bereich der Spitze des Tragflügels 1 herrschenden Strömungen. Hierdurch wird die Ausbildung von Randwirbeln und folglich auch des reduzierten Widerstandes vermindert, der Vortrieb verstärkt und grundsätzlih mehr Sicherheit erreicht.

## Patentansprüche

1. Flugzeug mit Rumpf und daran befestigten Tragflügeln, wobei an der Flügelspitze jedes Tragflügels (1) ein oder mehrere Einzelflügel (2) (Winglets) im wesentlichen vom Rumpf wegweisend angebracht sind, die um ihre Längsachse (3) gegen die durch den Tragflügel (1) definierte Ebene derart verschwenkt sind, daß sie in Richtung der Nase (4) des Tragflügels (1) nach unten weisen, **dadurch gekennzeichnet**, daß jeder Einzelflügel (2) eine Schränkung aufweist, daß die Anschlußkurve (6) zwischen Tragflügel (1) und Einzelflügeln (2) in Richtung auf die Hinterkante (5) des Tragflügels (1) zum Rumpf hin gekrümmt ist oder einen Halbkreis oder einen vom Rumpf weg weisenden Winkelschenkel beschreibt und der in Flugrichtung gesehen vordere Einzelflüge stets höher als der nachfolgende angeordnet ist und daß die Einzelflügel (2) sichelförmig nach oben gekrümmt sind.

## Claims

1. Aircraft with fuselage and wings fastened thereupon, whereby one or more single blades (2) (winglets), essentially pointing away from the fuselage, are disposed upon the wingtip of each wing (1), and are tilted about their longitudinal axes against the plane defined by the wing (1) in such a way that, in the direction of the nose (4) of the wing (1), they point downwards **wherein** each single blade (2) has a decalage, the junction curve (6) between wing (1) and single blades (2) is curved towards the fuselage in the direction to the trailing edge (5) of said wing (1), or describes a semicircle or a leg angle pointing away from the fuselage, and the single blades forward, as seen from the flight direction, are always disposed higher than those following, and said single blades (2) are curved upwards like crescents.

## Revendications

1. Aéronef avec fuselage et ailes qui y sont rattachées, au bout de chaque aile (1) étant implantées une ou plusieurs ailettes (2) (Winglets) d'orientation générale vers l'extérieur par rapport au fuselage, qui sont basculées autour de leur axe longitudinal (3) par rapport au plan défini par l'aile de telle sorte qu'elles pointent vers le bas en direction du bord d'attaque (4) de l'aile (1), **caractérisé en ce que** chaque ailette (2) présente un gauchissement, que la ligne d'implantation (6) entre aile (1) et ailettes (2) est recourbée vers le fuselage en direction du bord de fuite (5) de l'aile (1) ou décrit un demi cercle ou le côté d'un angle ouvert par rapport au fuselage et l'ailette antérieure dans la direction de vol est toujours située plus haut que l'ailette suivante et en ce que les ailettes (2) sont recourbées vers le haut en forme de faucille.

Fig.1

Fig. 2

EP 0 271 546 B1

Fig. 3

Fig. 4

EP 0 271 546 B1